# EUROPÄISCHE PATENTSCHRIFT

(11) **EP 3 030 804 B1**
(45) Veröffentlichungstag und Bekanntmachung des Hinweises auf die Patenterteilung: **27.02.2019**
(21) Anmeldenummer: 14741251.4
(22) Anmeldetag: 11.07.2014
(51) Int. Cl.: F16F 9/32

(54) **ANORDNUNG FÜR EINEN SCHWINGUNGSDÄMPFER EINES FAHRZEUGS**
ARRANGEMENT FOR A VIBRATION DAMPER OF A VEHICLE
SYSTÈME D'AMORTISSEUR DE VIBRATIONS POUR VÉHICULE AUTOMOBILE

(30) Priorität: 07.08.2013 DE 102013215602
(43) Veröffentlichungstag der Anmeldung: 15.06.2016
(73) Patentinhaber: Bayerische Motoren Werke Aktiengesellschaft, 80809 München (DE)
(72) Erfinder: EIFFLÄNDER, Thomas, 81825 München (DE); STROBL, Hubert, 86343 Königsbrunn (DE)
(86) Internationale Anmeldenummer: PCT/EP2014/064990
(87) Internationale Veröffentlichungsnummer: WO 2015/018601

(56) Entgegenhaltungen:
- DE-A1- 19 628 152
- DE-B3-102007 015 590
- GB-A- 2 309 947
- US-A1- 2007 093 096

## Beschreibung

Die Erfindung betrifft einen Schwingungsdämpfer eines Fahrzeugs nach dem Oberbegriff des Anspruchs 1.

Komponenten von Schwingungsdämpfern sind herkömmlich zumindest teilweise aus einem metallischen Werkstoff, wie beispielsweise Stahl oder Aluminium, aus Kunststoff oder aus einem Faserverbundwerkstoff gebildet. Insbesondere ist es bekannt, einen Dämpferzylinder, im Folgenden auch Tragrohr genannt, eines Schwingungsdämpfers aus einem Faserverbundwerkstoff herzustellen, um das Gewicht des Tragrohrs bzw. eines entsprechend ausgestatteten Schwingungsdämpfers zu reduzieren. Auch ist es bekannt, weitere Komponenten eines Schwingungsdämpfers, wie beispielsweise einen Federteller, zur Gewichtseinsparung aus einem Faserverbundwerkstoff herzustellen.

An einem Ende des Tragrohrs, welches beim Einsatz eines entsprechend ausgestatteten Schwingungsdämpfers in der Regel höher als das andere Ende des Tragrohrs angeordnet ist, wird üblicherweise ein Führungselement angeordnet, über das eine Kolbenstange linear geführt ist, an deren in dem Tragrohr befindlichen Ende ein beweglich in dem Tragrohr geführter Kolben angeordnet ist. An dem anderen Ende des Tragrohrs ist üblicherweise ein Befestigungselement zum Befestigen des Tragrohrs bzw. eines entsprechend ausgestatteten Schwingungsdämpfers an einem weiteren Bauteil eines Fahrzeugs angeordnet.

Das Tragrohr kann stoffschlüssig über eine Verklebung mit dem Führungselement und dem Befestigungselement verbunden sein. Eine solche stoffschlüssige Verbindung des Tragrohrs mit dem Führungselement und dem Befestigungselement ist nachteiligerweise mit einer Gefahr der Ausbildung von Gasundichtigkeiten im Bereich der Verklebungen verbunden. Ein entsprechendes Verkleben birgt zudem die Gefahr eines frühzeitigen und abrupten Totalversagens der Klebeverbindung und benötigt saubere, feintolerierte Oberflächen, welche zusätzliche Vor- und/oder Nachbearbeitungen in der Fertigung von Schwingungsdämpfern generieren. Des Weiteren kommt es beim Aushärten der Klebung üblicherweise zu einem Schrumpfen des Klebemittels, was ebenfalls Undichtigkeiten mit sich bringen und zu einem schlechten Verbindungszustand führen kann.

Alternativ kann das Tragrohr formschlüssig beispielsweise durch Umwickeln oder Umflechten eines sogenannten T-Igels mit einem Faserverbundwerkstoff mit dem Führungselement und dem Befestigungselement verbunden sein, insbesondere durch eine Integration dieser Verbindungstechnik in den Fertigungsprozess von Schwingungsdämpfern. Durch eine formschlüssige T-Igel-Verbindung entstehen zusätzliche Bauteilkosten für den T-Igel. Zudem gestaltet sich die Integration dieser Verbindungstechnik in den Fertigungsprozess eines entsprechend ausgebildeten Schwingungsdämpfers als aufwändig und birgt zusätzlich die Gefahr des Lösens der Verbindung durch unterschiedliche Wärmeausdehnungskoeffizienten der miteinander verbundenen Komponenten, insbesondere durch die bei einer Aushärtung des Faserverbundwerkstoffs herrschenden Temperaturen.

Die genannten Verbindungstechniken erfordern also eine aufwändige Fertigung und Aufbereitung der Fügestellen sowohl an dem Tragrohr als auch an dem Führungselement und dem Befestigungselement, wodurch eine gewünschte Leichtbauweise von Schwingungsdämpfern eingeschränkt ist.

Die US 2007/093096 A1, die zur Bildung des Oberbegriffs des Anspruchs 1 herangezogen ist und einen Dämpferzylinder mit konischem Endbereich zeigt, befasst sich nicht mit der Anbindung eines Befestigungselements am Dämpferzylinder, sondern mit der Anordnung einer Gasfeder. Die GB 2 309 947 A zeigt ein Federbein eines Fahrzeugs, dessen Schwingungsdämpfer über einen Klemmsitz gehalten ist.

Aufgabe der Erfindung ist es, eine neuartige Möglichkeit zur Ausbildung von hochqualitativen, leichtgewichtigen und kostengünstig herstellbaren Schwingungsdämpfern zu schaffen.

Diese Aufgabe wird mit den Merkmalen gemäß Anspruch 1 gelöst. Vorteilhafte Ausgestaltungen sind in den Unteransprüchen wiedergegeben, welche jeweils für sich genommen oder in verschiedener Kombination miteinander einen Aspekt der Erfindung darstellen können.

Bei einem erfindungsgemäßen Schwingungsdämpfer sind die beiden Endbereiche des Dämpferzylinders konisch oder keilförmig ausgebildet und es weist das in diesem Endbereich angeordnete Element eine entsprechend konisch bzw. keilförmig ausgebildete Außengestalt auf, wobei sich ein konisch bzw. keilförmig ausgebildeter Führungsendbereich zu dem Ende des Dämpferzylinders, an den der Führungsendbereich angeordnet ist, hin verjüngt und sich ein konisch bzw. keilförmig ausgebildeter Befestigungsendbereich zu dem Ende des Dämpferzylinder, an den der Befestigungsendbereich angeordnet ist, hin aufweitet.

Durch die konische bzw. keilförmige Ausgestaltung der Endbereiche des Dämpferzylinders und der entsprechenden Außengestalt des mit diesem Endbereich zu verbindenden Elements kann ein Klemmsitz durch Kraftschluss hergestellt werden, was eine sehr robuste Verbindung zwischen dem Tragrohr und dem jeweiligen Element herbeiführt. Durch beim Einsatz eines entsprechend ausgestatteten Schwingungsdämpfers auf die Verbindung zwischen dem Dämpferzylinder und dem Element einwirkende Kräfte wird die Qualität der Verbindung durch die konische bzw. keilförmige Ausgestaltung des Endbereichs des Dämpferzylinders und der Außengestalt des Elementes weiter erhöht.

Die Formgebung des Endbereichs bzw. der Außengestalt des Elementes kann konisch oder keilförmig sein. Eine keilförmige Ausgestaltung weist im Gegensatz zu einer konischen Ausgestaltung insbesondere statt einer kreisförmigen Grundfläche eine polygonale Grundfläche auf.

Es weist der Schwingungsdämpfer wenigstens eine den Endbereich zumindest teilweise umgebend an dem Endbereich anordbare Klemmmuffe auf, welche zumindest eine entsprechend konisch bzw. keilförmig ausgebildete Innengestalt aufweist. Durch die zumindest teilweise den Endbereich umgebende Anordnung der Klemmmuffe an dem Endbereich wird der Endbereich von außen gestützt, so dass der Dämpferzylinder bzw. dessen Endbereich unter Aufbringung größerer Klemmkräfte mit dem Element verbunden werden kann, was einer Erhöhung der Qualität der Verbindung zwischen dem Endbereich und dem Element gleichkommt.

Nach einer vorteilhaften Ausgestaltung ist die Klemmmuffe zumindest teilweise aus einem Metall oder einem Faserverbundwerkstoff gebildet. Als Metall kommt insbesondere Aluminium oder Stahl in Betracht. Der Faserverbundwerkstoff kann als Faserverbundkunststoff ausgebildet sein. Eine weitere vorteilhafte Ausführungsform sieht vor, dass die Fasern des Faserverbundwerkstoffs in Umfangsrichtung der Klemmmuffe verlaufend angeordnet sind. Hierdurch kann die Klemmmuffe größere Klemmkräfte aufnehmen, die durch die Verbindung zwischen dem Endbereich des Dämpferzylinder und dem Element erzeugt werden. Je höher die in dieser Verbindung herrschenden Klemmkräfte sind, desto höher ist die Qualität der Verbindung, insbesondere da Undichtigkeiten zuverlässig vermieden werden.

Es wird des Weiteren als vorteilhaft erachtet, wenn der Faserverbundwerkstoff einen thermoplastischen oder duroplastischen Kunststoff aufweist.

Gemäß einer weiteren vorteilhaften Ausgestaltung ist die Klemmmuffe zumindest teilweise mit dem Endbereich verklebt. Dies stärkt die zwischen dem Endbereich des Dämpferzylinders und dem Element hergestellte Verbindung.

Eine weitere vorteilhafte Ausgestaltung sieht vor, dass die Klemmmuffe und der Endbereich des Dämpferzylinders zumindest teilweise durch einen kombinierten zeitgleichen Verpressprozess mit Reibschweißen miteinander verbunden sind. Dies ist insbesondere dann von Vorteil, wenn sowohl die Klemmmuffe als auch der Dämpferzylinder in einem thermoplastischen Faserverbundkunststoff ausgebildet sind. Das Reibschweißen stellt hierbei ein einfaches und schnelles Fügeverfahren dar.

Vorteilhafterweise bildet die an dem konisch oder keilförmig ausgebildeten Führungsendbereich anordbare Klemmmuffe eine Anschlagkappe aus. Hierdurch können Kräfte, welche bei einem vollständig eingefahrenen Schwingungsdämpfer durch einen körperlichen Kontakt zwischen der Klemmmuffe und einem weiteren Bestandteil des Schwingungsdämpfers oder eines weiteren Bauteils eines Fahrzeugs in die Klemmmuffe eingeleitet werden, faserverbundgerecht als Druckkraft in den Faserverbundwerkstoff eingeleitet werden.

Nach einer weiteren vorteilhaften Ausgestaltung weist die an dem Führungsendbereich anordbare Klemmmuffe einen einen Federteller ausbildenden umlaufenden Kragen auf. Hierdurch werden zwei Bauteile eines Schwingungsdämpfers zu einem einzigen Bauteil zusammengeführt, welches die Funktionen der beiden ursprünglichen Bauteile übernimmt.

Ferner wird als vorteilhaft erachtet, wenn an der Innenseite der Klemmmuffe wenigstens ein zumindest teilweise umlaufend angeordneter Vorsprung in einem vorherigen Fertigungsprozessschritt oder nachträglich durch ein Press- oder Verrollvorgang angeordnet ist, wobei an der Außenseite des Endbereichs im Wesentlichen komplementär zu dem Vorsprung ausgebildete Nuten angeordnet sind. Hierdurch wird ein zusätzlicher Formschluss zwischen der Klemmmuffe und dem Endbereich hergestellt. Bei einer Klemmmuffe und einem Endbereich aus einem thermoplastischen Faserverbundkunststoff können der Vorsprung und die Nut in einem Arbeitsschritt unter Verwendung eines Heißpressverfahrens ausgebildet werden, während die Klemmmuffe an dem Endbereich festgelegt wird.

Weitere Einzelheiten, Merkmale und Vorteile der Erfindung ergeben sich aus der nachfolgenden Beschreibung und der Figur. Es zeigt:
- Figur 1: eine schematische Darstellung eines Ausführungsbeispiels für einen erfindungsgemäßen Schwingungsdämpfer,
- Figur 2: eine schematische Darstellung eines weiteren Ausführungsbeispiels für einen erfindungsgemäßen Schwingungsdämpfer,
- Figur 3: eine schematische Seitenansicht des in Figur 1 oder 2 gezeigten Ausführungsbeispiels bezüglich der Faserausrichtung,
- Figur 4: eine schematische Darstellung eines weiteren Ausführungsbeispiels für einen erfindungsgemäßen Schwingungsdämpfer, und
- Figur 5: eine schematische Darstellung eines weiteren Ausführungsbeispiels für einen erfindungsgemäßen Schwingungsdämpfer.

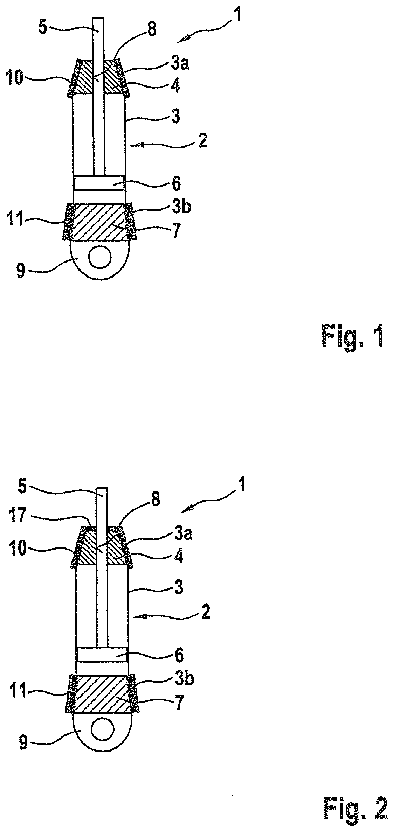

Figur 1 zeigt eine schematische Darstellung eines Ausführungsbeispiels für einen erfindungsgemäßen Schwingungsdämpfer 1 für ein nicht gezeigtes Fahrzeug.

Der Schwingungsdämpfer 1 weist eine Anordnung 2 auf, die zumindest einen Dämpferzylinder, im Folgenden auch Tragrohr 3 genannt, aus einem Faserverbundwerkstoff, ein in einem an ein Ende des Tragrohrs 3 angeordneten Führungsendbereich 3a des Tragrohrs 3 angeordnetes Führungselement 4 zum Führen einer Kolbenstange 5 eines beweglich in dem Tragrohr 3 angeordneten Kolbens 6 sowie ein in einem an das andere Ende des Tragrohrs 3 angeordneten Befestigungsendbereich 3b des Tragrohrs 3 angeordnetes Befestigungselement 7 zum Befestigen des Tragrohrs 3 an einem weiteren nicht gezeigten Bauteil des Fahrzeugs umfasst. An dem Führungselement 4 ist eine mittige Bohrung 8 ausgebildet, in der die Kolbenstange 5 linear beweglich geführt ist. An dem Befestigungselement 7 ist ein sogenanntes Gelenkauge 9 angeordnet, über das eine Anbindung des Schwingungsdämpfers 1 an ein weiteres Bauteil des Fahrzeugs vorgenommen werden kann.

Beide Endbereiche des Tragrohrs 3 sind in dieser Ausführungsform konisch ausgebildet ist. Auch die in diesen Endbereichen 3a, 3b angeordneten Elemente 4 und 7 weisen jeweils eine entsprechend konisch ausgebildete Außengestalt auf. Der konisch ausgebildete, oben dargestellte Führungsendbereich 3a verjüngt sich zu dem Ende des Tragrohrs 3 hin, an das der Führungsendbereich 3a angrenzt. Der konisch ausgebildete Befestigungsendbereich 3b weitet sich zu dem Ende des Tragrohrs 3 hin auf, an das der Befestigungsendbereich 3b angrenzt.

Sowohl an dem Führungsendbereich 3a als auch an dem Befestigungsendbereich 3b ist jeweils eine Klemmmuffe 10 bzw. 11 angeordnet, die den jeweiligen Endbereich 3a, 3b umgeben und welche eine entsprechend konisch ausgebildete Gesamtgestalt aufweisen.

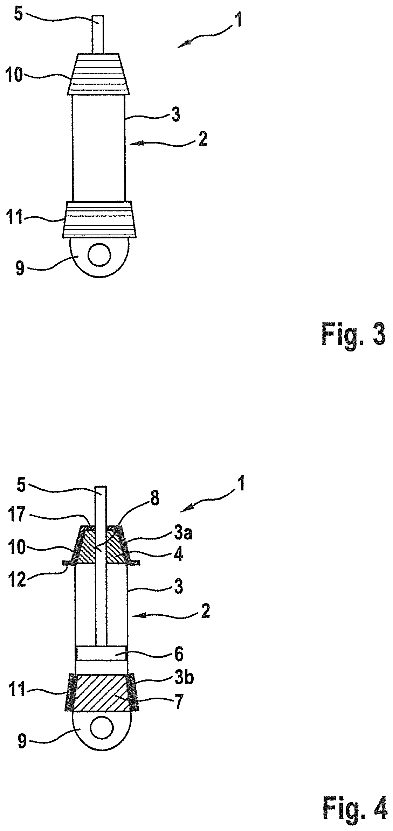

Die Klemmmuffen 10 und 11 können aus einem thermo- oder duroplastischen Faserverbundkunststoff gebildet sein, wobei die Fasern des Faserverbundkunststoffs in Umfangsrichtung der Klemmmuffe 10 bzw. 11 verlaufend angeordnet sind (siehe Figur 3). Die Klemmmuffen 10 und 11 sind durch vorbehaltlich einer thermoplastischen Ausführung Reibschweißen stoffschlüssig mit den jeweiligen Endbereichen 3a, 3b des Tragrohrs 3 verbunden.

Figur 2 zeigt eine schematische Darstellung eines weiteren Ausführungsbeispiels für einen erfindungsgemäßen Schwingungsdämpfer 1. Im Unterschied zu dem in Figur 1 gezeigten Ausführungsbeispiel ist an der oberen Klemmmuffe 10 ein Endabschnitt 17 ausgebildet, wodurch die an dem konisch ausgebildeten Führungsendbereich angeordnete Klemmmuffe 10 eine Anschlagkappe ausbildet.

Figur 3 zeigt eine schematische Seitenansicht des in Figur 1 oder 2 gezeigten Ausführungsbeispiels, wobei die radiale Anordnung der Fasern dargestellt ist.

Figur 4 zeigt eine schematische Darstellung eines weiteren Ausführungsbeispiels für einen erfindungsgemäßen Schwingungsdämpfer 1. Im Unterschied zu dem in den Figuren 2 und 3 gezeigten Ausführungsbeispiel weist die an dem Führungsendbereich 3a angeordnete Klemmmuffe 10 einen einen Federteller ausbildenden umlaufenden Kragen 12 auf.

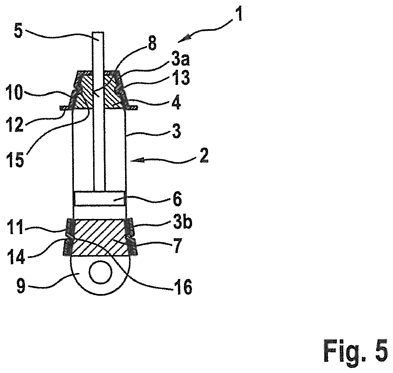

Figur 5 zeigt eine schematische Darstellung eines weiteren Ausführungsbeispiels für einen erfindungsgemäßen Schwingungsdämpfer 1. Im Unterschied zu dem in Figur 4 gezeigten Ausführungsbeispiel ist an der Innenseite jeder Klemmmuffe 10 bzw. 11 ein umlaufend angeordneter Vorsprung 13 bzw. 14 angeordnet, wobei an der Außenseite jedes Endbereichs eine im Wesentlichen komplementär zu dem jeweiligen Vorsprung 13 bzw. 14 ausgebildete Nut 15 bzw. 16 angeordnet ist.

Obgleich die Erfindung nur schematisch dargestellt ist, kann natürlich die erfindungsgemäße Anordnung sowohl bei einem Einrohrdämpfer als auch Zweirohrdämpfer zur Anwendung kommen.

Durch eine Klemmmuffe und deren erfindungsgemäß beschriebene Ausführungen wird eine Verbindung des Tragrohres mit den weiteren Komponenten in vorteilhafter Art und Weise ermöglicht.

## Patentansprüche

1. Schwingungsdämpfer (1) eines Fahrzeugs mit einem Dämpferzylinder (3) aus einem Faserverbundwerkstoff sowie einem in einem Endbereich (3a) des Dämpferzylinders (3) vorgesehenen Führungselement (4) zum Führen einer Kolbenstange (5) eines im Dämpferzylinder (3) beweglich angeordneten Kolbens (6) sowie mit einem am anderen Endbereich (3b) des Dämpferzylinders (3) vorgesehenen Befestigungselement (7) zum Befestigen des Dämpferzylinders (3) an einem Bauteil des Fahrzeugs, wobei beide Endbereiche (3a, 3b) des Dämpferzylinders (3) derart konisch oder keilförmig ausgebildet sind, dass sich der Führungsendbereich (3a), in dem das Führungselement (4) angeordnet ist, zum Ende des Dämpferzylinders (3) hin verjüngt und der Befestigungsendbereich (3b), in dem das Befestigungselement (7) angeordnet, ist zum Ende des Dämpferzylinders (3) hin aufweitet,
**dadurch gekennzeichnet, dass** das Führungselement (4) und das Befestigungselement (7) eine an den jeweiligen konischen oder keilförmigen Endbereich angepasste konische bzw. keilförmige Außengestalt aufweisen und zumindest durch einen Klemmsitz im jeweiligen (3a, 3b) Endbereich gehalten sind, wofür jeweils eine den Endbereich (3a, 3b) umgebende Klemmmuffe (10, 11), die zumindest eine entsprechend konisch bzw. keilförmig ausgebildete Innengestalt aufweist, vorgesehen ist.

2. Schwingungsdämpfer nach Anspruch 1, **dadurch gekennzeichnet, dass** die Klemmmuffe (10, 11) zumindest teilweise aus einem Metall oder einem Faserverbundwerkstoff gebildet ist.

3. Schwingungsdämpfer nach Anspruch 2, **dadurch gekennzeichnet, dass** die Fasern des Faserverbundwerkstoffs der Klemmmuffe (10, 11) in deren Umfangsrichtung verlaufend angeordnet sind.

4. Schwingungsdämpfer nach einem der Ansprüche 1 bis 3, **dadurch gekennzeichnet, dass** die Klemmmuffe (10, 11) zumindest teilweise mit dem Endbereich (3a, 3b) verklebt ist.

5. Schwingungsdämpfer nach einem der Ansprüche 1 bis 4, **dadurch gekennzeichnet, dass** die Klemmmuffe (10, 11) und der Endbereich (3a, 3b) des Dämpferzylinders zumindest teilweise durch einen kombinierten, zeitgleichen Verpressprozess mit Reibschweißen miteinander verbunden sind.

6. Schwingungsdämpfer nach einem der Ansprüche 1 bis 5, **dadurch gekennzeichnet, dass** die am Führungsendbereich (3a) angeordnete Klemmmuffe (10) eine Anschlagkappe ausbildet.

7. Schwingungsdämpfer nach einem der Ansprüche 1 bis 6, **dadurch gekennzeichnet, dass** die am Führungsendbereich (3a) angeordnete Klemmmuffe (10) einen einen Federteller ausbildenden umlaufenden Kragen (12) aufweist.

8. Schwingungsdämpfer nach einem der Ansprüche 1 bis 7, **dadurch gekennzeichnet, dass** an der Innenseite der Klemmmuffe (10, 11) wenigstens ein zumindest teilweise umlaufender Vorsprung (13, 14) und an der Außenseite des Endbereichs (3a, 3b) eine im Wesentlichen komplementär zu dem Vorsprung (13, 14) ausgebildete Nut (15, 16) vorgesehen ist.

## Claims

1. A vibration damper (1) of a vehicle comprising a damper cylinder (3) made from a fibre composite material and a guide element (4), provided in an end region (3a) of the damper cylinder (3), for guiding a piston rod (5) of a piston (6) arranged movably in the damper cylinder (3), and comprising a fastening element (7), provided at the other end region (3b) of the damper cylinder (3), for fastening the damper cylinder (3) to a component of the vehicle, wherein both end regions (3a, 3b) of the damper cylinder (3) are conical or wedge-shaped in such a way that the guide end region (3a) in which the guide element (4) is arranged tapers toward the end of the damper cylinder (3) and the fastening region (3b) in which the fastening element (7) is arranged widens toward the end of the damper cylinder (3),
**characterised in that** the guide element (4) and the fastening element (7) have a conical or wedge-shaped external shaping adapted to the corresponding conical or wedge-shaped end region and are held at least by a clamped fit in the respective end region (3a, 3b), for which purpose a clamping sleeve (10, 11), which at least has a conical or wedge-shaped inner shaping accordingly, is provided.

2. A vibration damper according to claim 1, **characterised in that** the clamping sleeve (10, 11) is formed at least partially from a metal or a fibre composite material.

3. A vibration damper according to claim 2, **characterised in that** the fibres of the fibre composite material of the clamping sleeve (10, 11) are arranged running in the circumferential direction of said sleeve.

4. A vibration damper according to any one of claims 1 to 3, **characterised in that** the clamping sleeve (10, 11) is at least partially adhesively bonded to the end region (3a, 3b).

5. A vibration damper according to any one of claims 1 to 4, **characterised in that** the clamping sleeve (10, 11) and the end region (3a, 3b) of the damper cylinder are connected to one another at least in part by a combined, simultaneous press-in process with friction welding.

6. A vibration damper according to any one of claims 1 to 5, **characterised in that** the clamping sleeve (10) arranged on the guide end region (3a) forms a stop cap.

7. A vibration damper according to any one of claims 1 to 6, **characterised in that** the clamping sleeve (10) arranged on the guide end region (3a) has a circumferential collar (12) forming a spring plate.

8. A vibration damper according to any one of claims 1 to 7, **characterised in that** at least one at least partially circumferential protrusion (13, 14) is provided on the inner side of the clamping sleeve (10, 11) and a groove (15, 16) formed in a manner substantially complementary to the protrusion (13, 14) is provided on the outer side of the end region (3a, 3b).

## Revendications

1. Amortisseur de vibrations (1) d'un véhicule comprenant un cylindre amortisseur (3) réalisé en un matériau composite renforcé par des fibres ainsi qu'un élément de guidage (4) prévu dans une zone d'extrémité (3a) du cylindre amortisseur (3) pour permettre de guider la tige (5) d'un piston (6) monté mobile dans le cylindre amortisseur (3), ainsi qu'un élément d'actionnement (7) situé à l'autre zone d'extrémité (3b) du cylindre amortisseur (3) pour permettre de fixer ce cylindre amortisseur (3) à un composant du véhicule, les deux zones d'extrémité (3a, 3b) du cylindre amortisseur (3) étant réalisées en forme de cône ou en forme de coin de sorte que la zone d'extrémité de guidage (3a) dans laquelle est monté l'élément de guidage (4) s'amincisse vers l'extrémité du cylindre amortisseur (3), et que la zone d'extrémité de fixation (3b) dans laquelle est monté l'élément de fixation (7) s'élargisse vers l'extrémité du cylindre amortisseur (3),
**caractérisé en ce que**
l'élément de guidage (4) et l'élément de fixation (7) ont une conformation externe en forme de cône ou de coin adaptée à la zone d'extrémité en forme de coin ou en forme de cône respective, et sont maintenus dans les zones d'extrémité (3a, 3b) respectives au moins par un ajustement serré, pour lequel il est respectivement prévu une douille de serrage (10, 11) entourant les zones d'extrémité (3a, 3b) qui a au moins une conformation interne réalisée en forme de cône ou en forme de coin correspondante.

2. Amortisseur de vibrations conforme à la revendication 1,
**caractérisé en ce que**
la douille de serrage (10, 11) est réalisée au moins en partie en un métal ou en un matériau composite renforcé par des fibres.

3. Amortisseur de vibrations conforme à la revendication 2,
**caractérisé en ce que**
les fibres du matériau composite renforcé par des fibres de la douille de serrage (10, 11) sont orientées dans sa direction périphérique.

4. Amortisseur de vibrations conforme à l'une des revendications 1 à 3,
**caractérisé en ce que**
la douille de serrage (10, 11) est collée au moins en partie aux zones d'extrémité (3a, 3b).

5. Amortisseur de vibrations conforme à l'une des revendications 1 à 4,
**caractérisé en ce que**
la douille de serrage (10, 11) et les zones d'extrémité (3a, 3b) du cylindre amortisseur sont reliées au moins partiellement par un procédé simultané combiné de pressage avec soudure par friction.

6. Amortisseur de vibrations conforme à l'une des revendications 1 à 5,
**caractérisé en ce que**
la douille de serrage (10) montée sur la zone d'extrémité de guidage (3a) forme un capuchon de butée.

7. Amortisseur de vibrations conforme à l'une des revendications 1 à 6,
**caractérisé en ce que**
la douille de serrage (10) montée sur la zone d'extrémité de guidage (3a) comporte une collerette périphérique (12) formant une coupelle élastique.

8. Amortisseur de vibrations conforme à l'une des revendications 1 à 7,
**caractérisé en ce qu'**
il est prévu, sur la face interne de la douille de serrage (10, 11), au moins une saillie au moins partiellement périphérique (13, 14) et sur la face externe de la zone d'extrémité (3a, 3b), une rainure (15, 16) essentiellement complémentaire à la saillie (13, 14).
